# EUROPEAN PATENT APPLICATION

(11) **EP 4 818 668 A1**
(43) Date of publication of application: **07.10.2026**
(21) Application number: 25382322.3
(22) Date of filing: 01.04.2025
(51) Int. Cl.: G01M 3/22

(54) **LEAK DETECTION SYSTEM FOR HOSES AND METHOD FOR DETECTING LEAKS IN HOSES**

(71) Applicant: Talens Systems SLU, 20870 Guipúzcoa (ES)
(72) Inventor: GABILONDO, Jose Juan, 20870 Elgoibar (Guipúzcoa) (ES); ALVAREZ, Piera, 20870 Elgoibar (Guipúzcoa) (ES)
(74) Representative: Balder IP Law, S.L.

(57) **Abstract**

A system for detecting leaks comprises a transport hose (11) connectable between a powder feeder (40) and a laser metal deposition equipment (50), through which a powder with a carrier gas is transported; a protection hose (12) covering the transport hose (11) and defining an annular space (12') between them; a first and second sealed joints (13, 13') connecting the protection hose (12) and the transport hose (11) in a sealed manner at a first and second end; a pressure variation measuring means (14) configured to detect a pressure variation in the annular space (12'); gas injecting means (16) configured for continuously injecting air or an inert gas in the annular space (12'); a flowmeter (18) coupled to the protection hose (12) downstream the gas injecting means (16) and configured to detect presence of powder.

## Description

### TECHNICAL FIELD

The invention relates in general to additive manufacturing techniques that use metal or ceramic powders to build up pieces, repair, or coat surfaces.

More particularly, the present invention refers to a leak detection system and method which detect leaks in hoses used to transport cladding powder from a powder feeding system to the powder inlets of a laser head nozzle.

An object of the invention is to provide a leak detection system that can identify any leak in the hose so that the powder feeding system can be stopped and the leak repaired, thereby preventing emergency situations such as explosions.

### STATE OF THE ART

Laser cladding is an industrial process in which a laser beam is focused on a surface of a substrate or a workpiece, while a filler material in the form of a wire or powder is supplied through a nozzle to be melted by the laser beam, such that a melt pool is formed on the substrate where the laser beam meets the filler material.

In the case of a powder as a filler material, the powder is supplied from a powder feeder which has a powder hopper in which the powder is stored and into which a gas is injected to create pressure in the hopper. Typically, nitrogen or argon is used, and occasionally helium. When the powder feeder is switched on, the gas and powder are conveyed from the powder feeder through a hose to a laser head, from where it is distributed and injected through several inlets to a nozzle of the laser head. The powder feeder must maintain a constant pressure in its hoppers to prevent fluctuations in the powder flow that could cause the powder to be fed at an uneven rate.

The U.S. patent publications US 2006/0266740 A1 and US 2011/0089151 A1 describe laser cladding equipment of this type.

To assure high-quality of the laser cladding process, it is critical that all the powder inlets of the nozzle, which can be a coaxial nozzle or a multi-jet nozzle, are supplied with an equal and consistent flow of powder in terms of flow rate and powder particles velocity.

However, as the powder must travel a relatively long distance from the powder feeder to the nozzle, it is important to detect if there is a leak in the hose. This is particularly important because powders with small particle sizes, such as those used in cladding, can be explosive due to their high surface area to volume ratio, which increases their reactivity. When these fine powder particles are suspended in air and rub against each other, they can generate static electricity and sparks. In the event of a leak, these sparks, combined with the surface area of the particles exposed to oxygen in the air, can lead to rapid oxidation and ignition, potentially causing an explosion. In addition, some powders are composed of materials that are inherently reactive with oxygen in the air. These materials, such as certain metals or organic compounds, can undergo rapid exothermic reactions when exposed to oxygen, leading to combustion or explosion. The smaller the particle size, the more reactive the powder becomes due to the increased surface area available for reaction.

Leaks in hoses carrying these powders can be particularly dangerous because they can create clouds of powder in the surrounding air. These clouds contain a high concentration of fine particles suspended in oxygen-rich air, creating an ideal environment for rapid combustion or explosion. The risk is particularly high if the leak occurs close to an ignition source or if the particles generate static electricity as they escape through the leak.

Detecting leaks in powder handling systems is critical to preventing potentially catastrophic explosions. Early detection can help maintain safe operating conditions, prevent the formation of explosive powder clouds and minimize the risk of ignition.

Therefore, there is still much room for improvement in this area of technology to ensure leak detection in hoses that carry the powder and carrier gas from the powder feeder to the nozzle, to ensure the safe handling and transport of this type of powder.

### DESCRIPTION OF THE INVENTION

The present invention describes methods and systems for detecting leaks in hoses used to transport powders with carrier gases, addressing a critical safety issue in the state of the art. These hoses, when compromised by leaks, pose a significant risk of explosion due to the combination of flammable powders and carrier gases escaping into the environment. The present invention ensures early detection of leaks, thereby increasing operational safety and preventing failures. This invention overcomes the limitations of existing technologies by providing a reliable and accurate approach to safeguarding industrial processes involving the transport of powders.

A first aspect of the invention is a leak detection system for hoses through which gas and powder are transported, the system comprising:
a transport hose connectable between a powder feeder and a laser metal deposition equipment, through which a powder with a carrier gas is transported from the powder feeder to the laser metal deposition equipment,
a protection hose covering the transport hose and defining an annular space between the transport hose and the protection hose,
a first sealed joint at a first end of the protection hose, which connects the protection hose and the transport hose, sealing the annular space at the first end,
a second sealed joint at a second end of the protection hose, which connects the protection hose and the transport hose, sealing the annular space at the second end, and
at least a pressure variation measuring means configured to detect a pressure variation in the annular space.

The transport hose is a conduit, preferably flexible, designed to transfer powdered materials. It is preferably made of an antistatic material to prevent static electricity buildup and reduce the risk of ignition in flammable environments. A carrier gas, such as nitrogen, fluidizes the powder for smooth transport through the hose.

A powder feeder, particularly for laser cladding, although it is not part of the present invention, is a device for feeding powdered materials to the laser cladding process. It is based on the use of carrier gas to transport the powder to the point of injection into the laser beam. These feeders can handle a wide range of particle sizes and powder morphologies.

A laser metal deposition equipment, particularly for laser cladding, although it is not part of the present invention, usually comprises a high-power laser source and a motion control system. The laser acts as the heat source to create a melt pool on the substrate. Simultaneously, metal powder is fed through nozzles into the melt pool, where it fuses with the substrate surface.

In laser cladding, powder refers to fine metallic particles, typically made from materials like iron, nickel, cobalt, or ceramic-based alloys. These powders are selected based on the desired properties of the clad layer, such as wear resistance, corrosion resistance, or heat resistance. The powder is delivered to the workpiece surface using a carrier gas, which ensures precise dosing and transport of the powder into the laser-generated melt pool. Common carrier gases include argon, helium, and nitrogen, chosen for their inertness and ability to prevent oxidation during the process.

The protection hose covering the transport hose shields the inner transport hose from abrasions, high temperatures, and other external factors that could compromise its integrity or functionality. Additionally, the protection hose creates an annular space between the transport hose and itself, in which pressure remains constant unless a leak appears in the transport hose. This is used for monitoring the pressure in the annular space and therefore to detect the leaks that may appear in the transport hose. In an embodiment of the invention, the protection hose is also flexible. Furthermore, in an embodiment of the invention, the protective hose is made of an antistatic material and it can additionally be ATEX-approved, ensuring safety by preventing static electricity buildup and minimizing explosion risks in flammable environments.

In view of the above, the annular space refers to the void or gap between the two concentric cylindrical objects, the two hoses in the present invention. The annular space may be uniform in shape if the inner and outer hoses are perfectly aligned, but it can also be irregular due to misalignment, variations in diameter, or deformation of the objects. In any case, the functioning of the system is not affected.

The sealed joints between the two hoses are connection points that ensure a leak-free and secure interface between them. In an embodiment of the invention, the sealed joints comprise a sealing mechanism, such as O-rings, gaskets, or specialized fittings, to create a tight seal that prevents gas or powder from escaping. The sealed joints withstand pressure and maintain their integrity over time. In an embodiment of the invention, the sealed joints also comprise threaded or compression fittings to provide additional stability and reinforce the seal.

The pressure variation measuring means are configured to measure and monitor changes in pressure within the confined area between the hoses, that is, the annular space. In an embodiment of the invention, the pressure variation measuring means employ a differential pressure measurement technique, comparing the pressure in the annular space to a reference pressure, converting the physical pressure changes into electrical signals, which can be processed and analyzed to detect anomalies or trends. In an embodiment of the invention, the pressure variation measurement means measures pressure over time, and it is a user who determines whether a pressure variation has occurred. In an embodiment of the invention, the pressure variation measuring means compares the pressure at each instant with a reference pressure and determines the pressure variation. In this way, an external user can check whether the variation is zero, or whether the pressure has varied in the annular space. In an embodiment, the pressure variation measuring means can generate a signal if a pressure variation above a predetermined threshold has occurred, thus avoiding the need for user monitoring.

The pressure in the annular space can increase or decrease if there is a leak in the transporting hose. The pressure in the annular space increases when there is a leak in the transporting hose and air or inert gas from the transporting hose accumulates in the annular space. The pressure in the annular space decreases when, if a gas is already present in the annular space at a certain pressure, and a leak occurs in the transporting hose and the pressure in the transporting hose is lower, the gas present in the annular space is introduced into the transporting hose, reducing the pressure in the annular space. In either case, the pressure variation measuring means measure the pressure variation that would be detected in either case.

The pressure measurement in the annular space is performed at a certain frequency, sufficiently high to determine, within a reasonable time interval, that a leak has occurred. This frequency may be, for example, every 5 seconds, every 2 seconds, every second, every 0,5 seconds, every 0,1 seconds or every 0,05 seconds, among others. In any case, the pressure variation measuring frequency will be adaptable to each particular case, depending for example on the requirements of the system or the requirements necessary to comply with ATEX regulations. In addition, the pressure variation measuring means have a sufficient resolution so that, in the event of a leak, even a small one, it can be detected. In an embodiment of the invention, the pressure variation measuring means have an accuracy of 0.1 bar, or 0.01 bar, or 0.001 bar, or 0.0001 bar.

In an embodiment of the invention, the system comprises a single pressure variation measuring means. In an embodiment of the invention, the system comprises two or more pressure variation measuring means arranged along the protective hose.

This invention provides a simple and effective approach to leak detection in transport hoses. It is a sensor-based system that can detect pressure changes due to potential leaks, allowing early detection.

In an embodiment of the invention, the system further comprises a controller connected to the pressure variation measuring means and configured to trigger an alarm and/or send a stop signal to the powder feeder if a variation of pressure over a predefined threshold is detected in the annular space.

When a leak is detected in the transport hose, an alarm can be triggered, which can be e.g. audible, luminous, or in the form of a notification to a computer, among others. Additionally or alternatively, a stop signal can be sent to the powder feeder to stop production and thus prevent the leak from continuing and an explosion from occurring. This stop signal can generally be sent to any system that has stop control of the cladding process.

In an embodiment of the invention, the pressure variation measuring means and the controller are connected via wired connections. In an embodiment of the invention, the pressure variation measuring means and the controller are connected via wireless connections.

The controller allows greater automation of leak detection by eliminating the need for a user to monitor the pressure sensor reading over time.

In an embodiment of the invention, the system further comprises pressure relief means coupled to the protection hose for relieving the pressure in the annular space when it is above a certain limit.

Pressure relief means refer to means for reducing excessive pressure in a system to prevent damage or failure. In an embodiment of the invention the pressure relief means is a pressure relief valve. These devices are designed to automatically open when the pressure in a system exceeds a predetermined safe limit, allowing excess fluid or gas to escape and thereby reducing the pressure to a safe level. This ensures that even if the powder feeder is not stopped quickly enough, or if the leak is large and the pressure in the annular space rises rapidly, the protective hose will not explode due to excessive pressure.

In an embodiment of the invention, the protection hose is selected between anti-static hose, such as polyurethane hose, flexible metal hose and corrugated hose.

The type of hose used depends mainly on the type of powder being carried. For example, an antistatic hose is a special type of flexible hose designed to safely dissipate static electricity during material transfer. It is designed to prevent the build-up of electrical charges that could potentially cause sparks, fires or explosions in industrial environments. The flexible hose has the advantage that it is easier to handle and wrap around the transport hose.

In an embodiment of the invention the system further comprises a gas injecting means coupled to the protection hose and configured to inject an inert gas into the annular space until a predetermined pressure is reached in the annular space.

The gas injection means may, for example, be an injection valve, coupled to the protection hose, through which an inert gas, such as e.g. nitrogen, can be injected prior to the start of operation of the system. In this way, the initial pressure in the annular space is known, and this initial pressure is used by the pressure variation measuring means as a reference pressure, with which the pressure measured at each instant is compared to determine whether there has been a pressure variation. In addition, introducing an inert gas into the annular space has the advantage of creating an inert atmosphere which prevents explosions even if the transported powder leaks into the annular space.

A second aspect of the invention is a leak monitoring system for hoses through which gas and powder are transported, the system comprising:
a transport hose connectable between a powder feeder and a laser metal deposition equipment, through which a powder with a carrier gas is transported from the powder feeder to the laser metal deposition equipment,
a protection hose covering the transport hose and defining an annular space between the transport hose and the protection hose,
a first sealed joint at a first end of the protection hose, which connects the protection hose and the transport hose, sealing the annular space at the first end,
a second sealed joint at a second end of the protection hose, which connects the protection hose and the transport hose, sealing the annular space at the second end,
gas injecting means coupled to the protection hose and configured to continuously inject air or an inert gas into the annular space, and
a flowmeter coupled to the protection hose downstream the gas injecting means and configured for receiving the air or inert gas injected into the annular space and to detect a presence of powder.

The transport hose, powder feeder, laser metal deposition equipment, protection hose, sealed joints and gas injecting means are the same as previously defined.

In this second aspect of the invention, the gas injection means continuously inject air or an inert gas into the annular space to create a flow which, when a leak occurs in the transport hose, pulls the powder carried into the annular space so that it is carried to the flowmeter.

A flowmeter for detecting powder in a gas is designed to measure the flow rate or quantity of powder transported within a gas stream. It is commonly used to monitor and control the real-time mass flow of powders in pipelines or hoses. In embodiment of the invention, the flowmeter is based on electrostatic measurement, impact plate detection, or capacitance-based sensing, to detect the interaction between the powder particles and the sensor. The collected data is processed into output signals that represent the flow rate or total transported mass. These flowmeters can be adapted to different particle sizes and flow ranges.

In an embodiment of the invention, the flowmeter measures the amount of powder in the air or inert gas current that passes through the flowmeter. In this way, an external user can check whether the amount of powder is zero, or whether there is a certain amount of powder present. In an embodiment, the flowmeter can generate a signal if a certain amount of powder above a predetermined threshold has been detected, thus avoiding the need for monitoring by a user.

The flow measurement is performed at a certain frequency, sufficiently high to determine, within a reasonable time interval, that a leak has occurred. This frequency may be, for example, every 5 seconds, every 2 seconds, every second, every 0,5 seconds, every 0,1 seconds or every 0,05 seconds, among others. In any case, the flow measuring frequency will be adaptable to each particular case, depending for example on the requirements of the system or the requirements necessary to comply with ATEX regulations. In addition, the flowmeter has a sufficient resolution so that, in the event of a leak, even a small one, it can be detected. In an embodiment of the invention, the flowmeter has an accuracy range of 0.1%-5%, or of 0.2-3% or of 0.1%-0.5%.

Air refers to the mixture of gases present in the atmosphere, such as nitrogen, oxygen, carbon dioxide, argon, and others. Inert gas refers to a gas that does not readily undergo chemical reactions with other substances, preventing unwanted reactions like oxidation. Examples of inert gases include noble gases (helium, neon, argon, krypton, xenon, and radon), nitrogen, and carbon dioxide.

In an embodiment of the invention, the system further comprises a controller coupled to the flowmeter and configured to trigger an alarm and/or send a stop signal to the powder feeder if powder is detected.

The same definitions and advantages explained in relation to the controller of the first aspect of the invention can be applied to the controller of this second aspect of the invention.

In an embodiment of the invention, the system further comprises fluid separation means coupled to the flowmeter for releasing the air or inert gas and retaining the powder, and a powder deposit coupled to the fluid separation means for storing the filtered powder.

In an embodiment of the invention, the fluid separation means comprise an aerator with filter, which receives the air or inert gas stream and collects the powder present therein, releasing air or gas free of powder.

In an embodiment of the invention, the fluid separation means comprise a cyclone separator, which generates a vortex in which the effects of rotation and gravity are used to separate the mixture of air or inert gas and powder. In an embodiment of the invention, the top of the cyclone separator through which the powder-free air or inert gas exits is directed to an extraction system.

The powder deposit is coupled to the aerator with filter or to the cyclone separator so that when the powder is filtered, it can be stored in the deposit. Inside the deposit, the air velocity decreases, allowing the powder particles to separate from the air stream due to gravity or centrifugal forces. The separated powder is collected at the bottom of the deposit, while the cleaned air exits through the aerator filter to prevent contamination.

In an embodiment of the invention, the system further comprises a second pressure relief means connected to the powder deposit and configured for relieving the pressure when it is above a certain limit.

As with the first ones, pressure relief means refer to means for reducing excessive pressure in a system to prevent damage or failure. In an embodiment of the invention the second pressure relief means is pressure relief valve which automatically opens when the pressure in the powder deposit exceeds a predetermined safe limit, allowing air or gas to escape and thereby reducing the pressure to a safe level.

The system described in the second aspect of the invention detects the presence of a leak by identifying the presence of the powder which, when exiting the transport hose, is transported through the annular space carried by the air or inert gas injected, and is measured in the flowmeter.

In an embodiment of the invention, the system further comprises at least a pressure variation measuring means configured to detect a variation in pressure in the annular space.

This embodiment of the invention presents the advantages mentioned above, but in addition, in this case, the system is redundant as it includes both the pressure variation measuring means and the flowmeter, which allow for greater accuracy in detecting leaks, as well as redundancy in the system, in the event that either of the two fails.

In an embodiment of the invention, the controller is further connected to the pressure variation measuring means and it is further configured for triggering an alarm and/or send a stop signal to the powder feeder if a variation of pressure is detected in the annular space.

In an embodiment of the invention, the controllers previously defined in the different aspects of the invention comprise at least a processor and a memory. In an embodiment of the invention, the controller is adjacent to the system. In an embodiment of the invention, the computing system is at a remote location.

A third aspect of the invention is a method for detecting leaks in hoses through which gas and powder are transported, wherein the method comprises:
providing a leak detection system according to the first aspect of the invention,
monitoring, with the at least a pressure variation measuring means the pressure in the annular space, and
triggering an alert and/or sending a stop signal to the powder feeder if a pressure variation above a certain threshold is detected in the annular space.

In an embodiment of the invention, the method further comprises providing a leak monitoring system according to the first aspect of the invention, particularly to the embodiment in which the system comprises gas injecting means, and wherein the method further comprises, before monitoring the pressure in the annular space:
injecting, with the gas injecting means, an inert gas in the annular space until a predetermined initial pressure is reached in the annular space and closing the gas injecting means,
measuring, with the pressure variation measuring means the initial pressure in the annular space,
and wherein the alert is triggered and/or a stop signal is sent to the powder feeder if a pressure variation above a certain threshold with respect to the initial pressure is detected in the annular space.

A fourth aspect of the invention is a method for monitoring a leak in a hose through which gas and powder are transported, wherein the method comprises:
providing a leak monitoring system according to the second aspect of the invention,
injecting continuously air or an inert gas with the gas injecting means in the annular space,
monitoring, in the flowmeter, the injected inert gas, and
triggering and alert and/or sending a stop signal to the powder feeder if the flowmeter detects powder in the inert gas.

In an embodiment of the invention, the leak monitoring system according to the second aspect of the invention is that which comprises at least one pressure variation measuring means. In this embodiment, the method further comprises:
monitoring, in the at least one pressure variation measuring means the pressure in the annular space, and
triggering and alert and/or sending a stop signal to the powder feeder if a pressure variation is detected, and/or if the flowmeter detects powder.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 illustrates a leak detection system for powder and gas hoses.
Figure 2 illustrates a second embodiment of the leak detection system for powder and gas hoses.
Figure 3 illustrates a leak monitoring system for hoses through which gas and powder are being transported.
Figure 4 illustrates a second embodiment of the leak monitoring system.
Figure 5 illustrates a sectional view of an embodiment of the pressure variation measuring means.
Figure 6 illustrates a sectional view of another embodiment of the pressure variation measuring means.
Figure 7 shows a flow diagram of a method for detecting leaks in powder and gas hoses, according to a first embodiment of the invention.
Figure 8 shows a flow diagram of a method for detecting leaks in powder and gas hoses, according to a second embodiment of the invention.
Figure 9 shows a flow diagram of a method for monitoring a leak in a hose through which a gas and powder are being transported.
Figure 10 shows a flow diagram of a method for monitoring a leak in a hose through which a gas and powder are being transported, in a second embodiment of the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

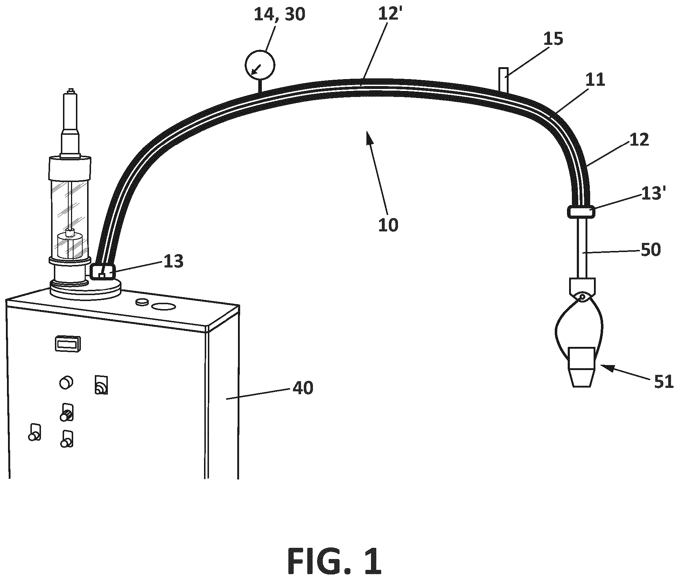

Figure 1 shows a perspective front view of a leak detection system 10 according to a particular embodiment of the invention. It should be understood that the system 10 of Figure 1 may include additional components and that some of the components described herein may be removed and/or modified without departing from a scope of the described system 10. Additionally, implementation of the system 10 is not limited to such embodiment.

The leak detection system 10 comprises a transport hose 11, which is connectable between a powder feeder 40 and a laser metal deposition equipment 50, also known as laser cladding equipment. A powder suspended in a carrier gas, Argon or Nitrogen, is transported through the transport hose 40. Said powder can be a metal powder (stainless steel, silver, copper nickel, titanium, cobalt, metal oxides, etc.), a ceramic powder (carbides, nitrides, oxide ceramics, etc.) or a combination of both. Said metal powder can be made of a single metal component, a combination of metal components, alloys and any combination thereof. Ceramic powder can be made of a single ceramic component or a combination of ceramic components. In the Figures it is not shown that the transporting hose 11 is hollow to make them easier to understand, but it is evident that air or inert gas and powder circulate inside it.

The powder is stored in a feeding hopper in the powder feeder 40 and a flow of powder and carrier gas is fed through the transport hose 11, which conducts it to the laser metal deposition equipment 50. There, it is guided through a nozzle 51 to be deposited on a workpiece. The transport hose 11 is made of an anti-static material to prevent the buildup of electrical charges.

A second hose, particularly a protection hose 12, covers the transport hose 11 in its entire length, therefore from the powder feeder 40 to the laser metal deposition equipment 50. The two hoses 11, 12 are disposed coaxially and concentrically, forming an annular space 12' that extends between the two hoses 11, 12 along their entire length. In an embodiment of the invention, the thickness of the annular section is 0,5-3 mm. As can be seen, this range defines an annular space 12' of small section, because in this way, in case of a leak, the pressure will rise quickly in the annular space 12' and the pressure variation detection will be almost immediate. In any case, the thickness of the annular space 12' will also depend on the type of hoses 11, 12 used.

The transport hose 11 and the protection hose 12 are connected with sealed joints 13, 13', sealing the annular space 12'. A first sealed joint 13 is at a first end of the hoses 11, 12 sealing the annular space 12' at the first end and a second sealed joint 13' at a second end of the hoses 11, 12 sealing the annular space 12' at the second end. The first end is connectable to the powder feeder 40 and the second end is connectable to the laser metal deposition equipment 50. The way in which the hoses 11, 12 are connected to said elements is not part of the invention, but said connections are also sealed. Therefore, the sealed joints 13, 13' seal the first and second ends of the protection hose 12 to the first and second ends of the transport hose 11. In this way, the annular space 12' between the two hoses 11, 12 is completely sealed. If there is no leak in the transport hose 11 the pressure in the annular space 12' is essentially constant.

As illustrated in Figure 1, the leak detection system 10 further comprises pressure variation measuring means, configured to detect any pressure variation in the annular space 12'. That is, whether the pressure increases or decreases.

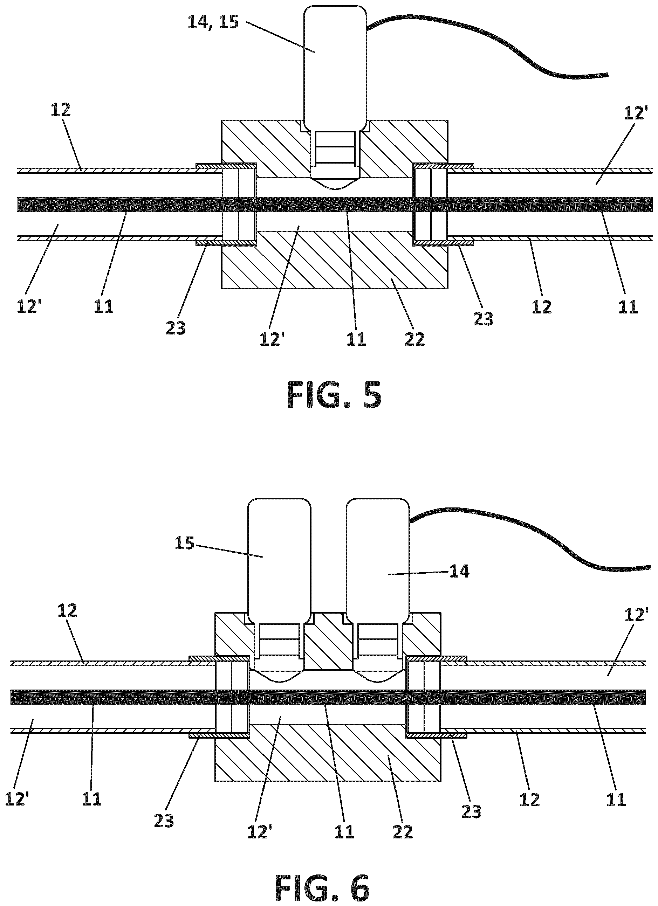

Figures 5 and 6 illustrate an embodiment of the pressure variation measuring means. In this embodiment, the pressure variation measuring means comprise a hose connector 22 which is made of metal and is located between two portions of the protection hose 12. The protection hose 12 is connected to the hose connector 22 by two threaded joints 23 or fittings, one on each side. As can be seen in the two Figures, the transporting hose 11 continues without obstruction, as does the annular space 12', which is maintained inside the hose connector 22. The threaded joints 23 ensure that there are no leaks. In Figure 5, a pressure sensor 14 is mounted on the hose connector 22. No air or gas can escape from the annular space 12', but the pressure sensor 14 can monitor any pressure variation that may occur in the annular space 12'. In the embodiment shown in Figure 5, a relief valve 15 is integrated with the pressure sensor 14 so that, if a pressure above a certain threshold is reached in the annular space 12' it can be reduced. In figure 6, the relief valve 15 is independently fitted to the hose connector 22.

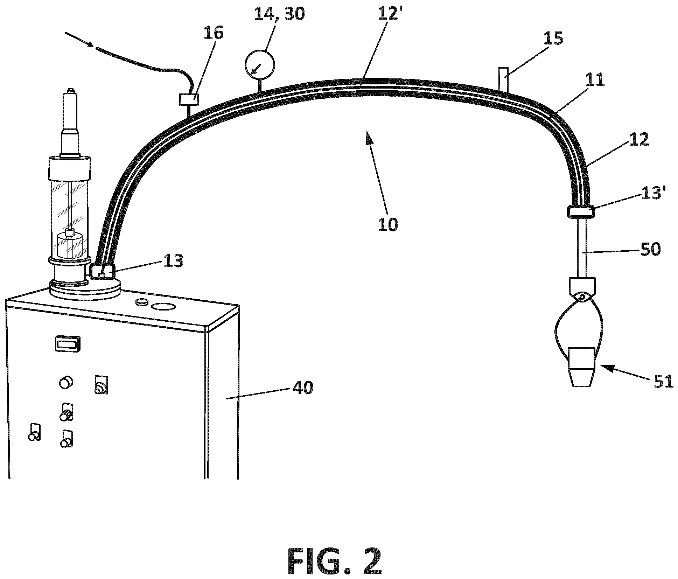

In the embodiment illustrated in figures 1 and 2, the pressure variation measuring means comprise a pressure sensor 14, which is placed inside the annular space 12' and comprises a pressure reading element which is outside the protection hose 12 so that a user can read the measured pressure in the annular space 12'. Therefore, the pressure sensor 14 is inserted through the protection hose 12 and it is completely sealed and no air escapes from the annular space 12' to the outside.

If a leak appears in the transport hose 11, the carrier gas which circulates through the transport hose 11 and maybe even some powder particles, depending on the size of the leak, exit the transport hose 11 and start filing the protection hose 12. In this case, in the annular space 12' the pressure starts rising and the pressure sensor 14 provides a measurement which is higher than the pressure measurement when there is no leak. The pressure sensor 14 has sufficient resolution to detect a pressure variation in the annular space 12' irrespective of the leak size.

If a user, when reading the pressure sensor 14 measurements, detects a change in the pressure, they can stop the powder feeder 40 and stop production to fix the transport hose 11.

However, as shown in Figure 1, and to improve the monitorization of the pressure in the annular space 12', the system 10 further comprises a controller 30, connected to the pressure sensor 14, which receives the pressure measurements from the pressure sensor 14. If the controller 30, when receiving the pressure measurements, detects a variation, it generates an alarm. Alternatively or additionally, it can send an stop signal to the powder feeder 40, so that the leak can be fixed and any risk of explosion is prevented. The variation detected in the controller 30 can be that the pressure is above a certain level or that it is below a certain level. The alarm can be, for example, a light and sound alarm.

In case the pressure in the annular space 12' increases very rapidly, the system 10 also comprises pressure relief means, particularly a relief valve 15, coupled to the protection hose 12, and communicating the annular space 12' with the exterior. In the event that the pressure in the annular space 12' reaches a certain limit, the relief valve 15 opens and expels air to the outside, releasing pressure in the annular space 12', and preventing the protection hose 12 from exploding. In this case, the relief valve 15 can start working, for example, when the pressure in the annular space 12' reaches 3 bar.

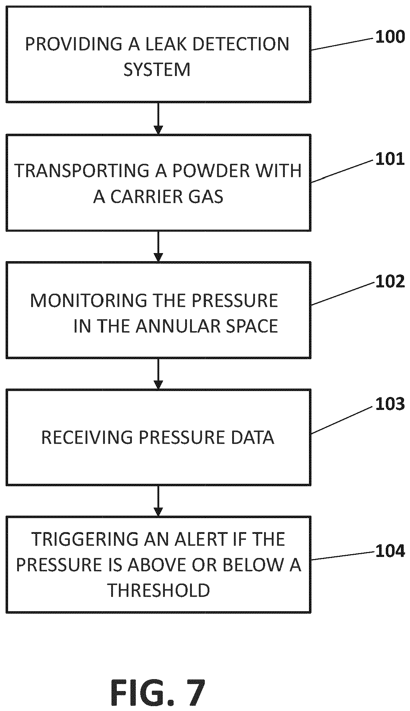

A method for detecting leaks in powder and gas hoses using the system 10 previously described is illustrated in Figure 7. A first step of the method is therefore providing 100 a leak detection system 10 as previously described. Then, transporting 101 through the transport hose 11 a powder using a carrier gas, from the powder feeder 40 to the laser metal deposition equipment 50. In this case, transporting 101 refers to initiating the circulation of powder and gas through the transport hose 11. To do so, the powder feeder 40 is activated.

The next step is monitoring 102, with the pressure sensor 14, the pressure in the annular space 12'. As previously indicated, the annular space 12' is completely sealed and if there is no leak in the transport hose 11, the pressure measured by the pressure sensor 14 is constant. The pressure sensor 14 sends the pressure measurements to the controller 30. If a leak appears in the transport hose 11, the pressure in the annular space 12' changes. It can increase or decrease. In both cases, the pressure sensor 14 keeps sending the pressure measurements to the controller 30. When the controller detects a variation of the pressure, it triggers 104 an alert so that the system can be stopped and the leak fixed. Said variation must exceed a certain threshold for the controller 30 to identify that it has been a leak. For example, if the pressure inside the transport hose 11 is 0.5 bar, the controller 30 detects a leak if the variation of pressure in the annular space 12' is over 0.01 bar if the pressure sensor 14 has an accuracy of 0.01 bar.

Figure 2 illustrates a second embodiment of the leak detection system 10. Apart from the elements previously described, the system 10 further comprises gas injecting means, such as a gas injection valve 16, coupled to the protection hose 12, and accessing the annular space 12'. The interface between the protection hose 12 and the gas injection valve 16 is completely sealed and no air can enter or leave the annular space 12'.

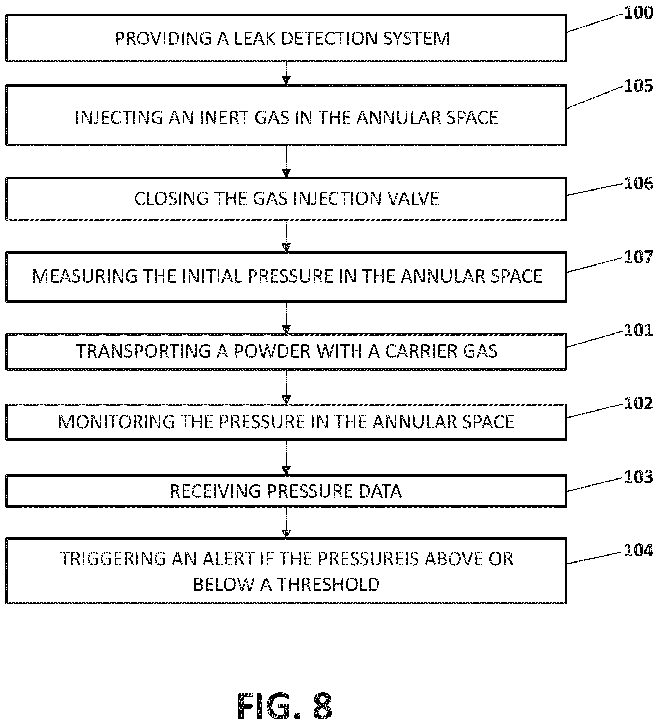

Figure 8 shows a flow diagram of a method for detecting leaks in hoses using the system of figure 2. In this case, before the powder feeder 40 starts feeding the laser metal deposition equipment 50 through the transport hose 11, the annular space 12' is filed with an inert gas through the gas injection valve 16. In this way, the annular space 12' is at a known pressure, which is controlled by introducing a certain amount of inert gas. While the inert gas is being introduced in the annular space 12' through the gas injection valve 16, the pressure sensor 14 measures the pression in the annular space 12' and once a desired pression is reached, the gas injection stops and the gas injection valve 16 closes. In this way, the annular space 12' is filed with an inert gas at a known pressure. The controller 30, which is connected to the pressure sensor 14, considers said pressure as the initial one. Then, the powder feeder 40 is activated and the powder is transported through the transport hose 11. If a leak appears in the transport hose 11 or even in the protection hose 12, the pressure measured by the pressure sensor 14 varies from the initial pressure. The controller 30 registers said variation and triggers and alarm 104 for stopping the system and fixing it.

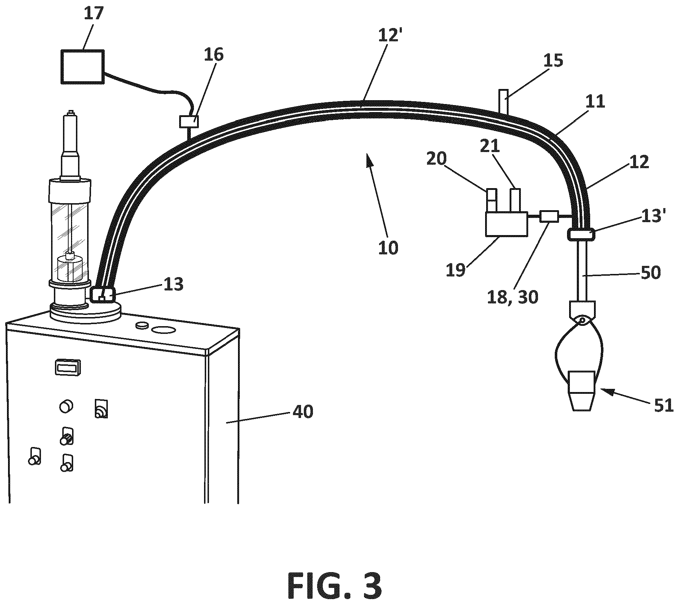

Figure 3 illustrates a leak monitoring system 10 for hoses through which gas and powder are being transported. As with the previous one, the present system 10 also comprises a transport hose 11 connectable between a powder feeder 40 and a laser metal deposition equipment 50, a protection hose 12 covering the transport hose 11 in its entirety, defining an annular space 12'. Both hoses 11, 12 are also sealed with a first and second sealed joints 13, 13'. As presented in figure 3, the system 10 further comprises gas injecting means, which in this case comprise a gas injection valve 16 coupled to the protection hose 12 for introducing air or an inert gas in the annular space 12' and a gas injector 17, fluidly connected to the gas injection valve 16.

As can be seen in figure 3, the gas injection valve 16 is placed closer to the first sealed joint 13, and therefore upstream the protection hose 12. Furthermore, the system 10 comprises a flowmeter 18, coupled to the protection hose 12 and downstream the gas injection valve 16. In this way, the flowmeter 18 receives the inert gas injected into the annular space 12'. The flowmeter 18 is configured to detect the presence of powder in the inert gas or air current, which occurs when a leaks appears in the transport hose 11.

To avoid releasing air or inert gas which may contain powder when there is a leak in the transport hose 11, the system 10 also comprises a powder deposit 19 fluidly connected to the flowmeter 18, for storing the powder that may be present in the gas. The powder deposit 19 comprises, as illustrated in Figure 3, fluid separator means, which in the present case comprise an aerator with filter 20, to allow the inert gas to be discharged, but retaining any powder that may be present. Furthermore, in case there is a bigger leak in the transport hose 11 and the pressure increases rapidly in the powder deposit 19, it also comprises a second pressure relief means, such as a pressure relief valve 21, connected to the powder deposit 19, which relieves the pressure in the powder deposit 19 once it has reached a certain limit, to avoid explosions or mal-function. For example, if the pressure inside the powder deposit 19 reaches 3 bar, the second pressure relief valve 21 opens.

Additionally, the system 10 can comprise recirculating means (not illustrated in the figures), for recirculating the air or specially the inert gas that exists through the aerator with filter 20, and reinjecting it in the annular space 12' through the injection valve 16.

In the system 10 illustrated in figure 3, the flowmeter 18 is connected to a controller 30, and when the presence of powder in the gas is detected, an alarm is triggered. Additionally or alternatively, a stop signal is sent to the powder feeder 40 so that production is stopped and the leak can be repaired.

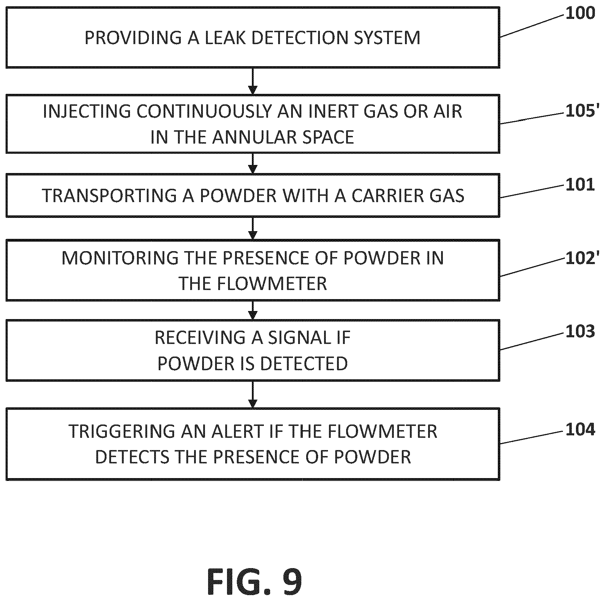

Figure 9 illustrates a flow diagram of a method for monitoring a leak in a hose, which uses the system 10 of Figure 3. In this case, while the powder feeder 40 is feeding 101 the laser metal deposition equipment 50 through the transport hose 11, the gas injecting means continuously inject 105' an inert gas in the annular space 12'. Said inner gas is received in the flowmeter 18. If a leak appears in the transport hose 11, some of the powder which is being transported leaves the transport hose 11 and enters the annular space 12'. It is then carried downstream to the flowmeter 18, which is configured to monitor 102' the presence of said powder in the inert gas or air. If the presence of powder is detected, the controller receives a signal 103 from the flowmeter 18 and triggers and alarm 104 to stop the production. Additionally or alternatively, the controller 30 sends a stop signal to the powder feeder, so that the leak can be repaired.

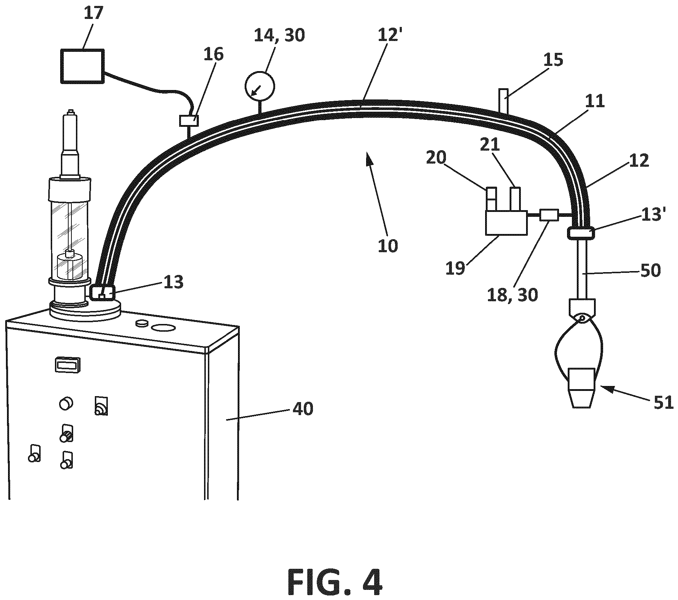

Figure 4 illustrates another embodiment of the system of Figure 3 which, apart from the elements previously described also comprises a pressure sensor 14 for monitoring the pressure in the annular space 12'.

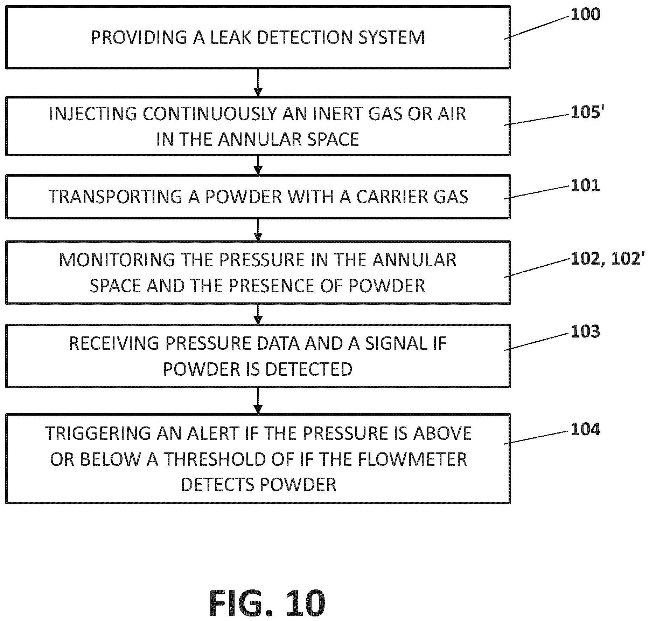

Figure 10 is a flow diagram of a method for monitoring a leak in a hose in which a system as illustrated in Figure 4 is provided 100. In this case, once the powder feeder 40 is activated and starts feeding powder with a carrier gas to the laser metal deposition equipment 50 through the transport hose 11, the gas injector 17 begins continuously injecting 105' an inert gas or air through the gas injecting valve 16 into the annular space 12'. The inert gas or air circulates through the annular space 12' until it reaches the flowmeter 18 and exists the system 10 through the aerator with filter 20.

If a leak appears in the transport hose 11, the system 10 provides two ways of detecting it. Firstly, the pressure sensor 14 is constantly monitoring 102 the pressure in the annular space 12'. If a leak appears, the pressure changes. At this point, the controller 30 detects the pressure variation provided by the pressure sensor 14 and triggers an alarm 104. Secondly, the flowmeter 18 is constantly monitoring 102' the inert gas or air flow. If a leak appears, it is possible that some powder leaves the transport hose 11. In this case, the flowmeter 18 detects the presence of powder in the inert gas and the controller 30 also triggers 104 the alarm. In this case, the powder is accumulated in the powder deposit 19, while the inert gas or air current is filtered and leaves the system through the aerator with filter 20.

If a big leak appears which causes the pressure to increase fast in the annular space 12', the system 10 comprises the two pressure relief valves 15, 21 illustrated in Figure 4, coupled to the protection hose 12 and to the powder deposit 19. In this way, the pressure is relieved in the system 10, avoiding an explosion of the protection hose 12.

The numerical signs and corresponding components indicated in Fig. 1 to 10 are further listed below:
Leak detection system 10
Transport hose 11
Protection hose 12
Annular space 12'
Sealed joints 13, 13'
Pressure sensor 14
Pressure relief means 15
Gas injecting means 16
Gas injector 17
Flowmeter 18
Powder deposit 19
Fluid separation means 20
Second pressure relief means 21
Hose connector 22
Threaded joint 23
External computer 30
Powder feeder 40
Laser metal deposition equipment 50
Nozzle 51
Providing 100
Transporting 101
Monitoring 102
Receiving 103
Triggering an alert 104
Injecting 105, 105'
Closing 106
Measuring 107

## Claims

1. A leak detection system for hoses through which gas and powder are transported, the system comprising:
a transport hose (11) connectable between a powder feeder (40) and a laser metal deposition equipment (50), through which a powder with a carrier gas is transported from the powder feeder (40) to the laser metal deposition equipment (50),
a protection hose (12) covering the transport hose (11) and defining an annular space (12') between the transport hose (11) and the protection hose (12),
a first sealed joint (13) at a first end of the protection hose (12), which connects the protection hose (12) and the transport hose (11), sealing the annular space (12') at the first end,
a second sealed joint (13') at a second end of the protection hose (12), which connects the protection hose (12) and the transport hose (11), sealing the annular space (12') at the second end, and
at least a pressure variation measuring means (14) configured to measure a pressure variation in the annular space (12').

2. The system of claim 1, further comprising a controller (30) connected to the pressure variation measuring means (14) and configured to trigger an alarm and/or send a stop signal to the powder feeder (40) if a pressure variation above a predefined threshold is detected in the annular space (12').

3. The system of any of the previous claims, wherein it further comprises pressure relief means (15) coupled to the protection hose (12) for relieving the pressure in the annular space (12') when it is above a predefined limit.

4. The system of any of the previous claims, wherein the protection hose (12) is selected between anti-static hose, flexible metal hose and corrugated hose.

5. The system of any of the previous claims, wherein it further comprises a gas injecting means (16) coupled to the protection hose (12) and configured to inject an inert gas in the annular space (12') until a predetermined pressure is reached in the annular space (12').

6. A leak monitoring system for hoses through which gas and powder are transported, the system comprising:
a transport hose (11) connectable between a powder feeder (40) and a laser metal deposition equipment (50), through which a powder with a carrier gas is transported from the powder feeder (40) to the laser metal deposition equipment (50),
a protection hose (12) covering the transport hose (11) and defining an annular space (12') between them,
a first sealed joint (13) at a first end of the protection hose (12), which connects the protection hose (12) and the transport hose (11), sealing the annular space (12') at the first end,
a second sealed joint (13') at a second end of the protection hose (12), which connects the protection hose (12) and the transport hose (11), sealing the annular space (12') at the second end,
gas injecting means (16) coupled to the protection hose (12) and configured to continuously inject air or an inert gas into the annular space (12'), and
a flowmeter (18) coupled to the protection hose (12) downstream the gas injecting means (16) and configured for receiving the air or inert gas injected into the annular space (12') and to detect a presence of powder.

7. The system of claim 6, further comprising a controller (30) coupled to the flowmeter (18) and configured to trigger an alarm and/or send a stop signal to the powder feeder (40) if powder is detected in the air or inert gas received in the flowmeter (18).

8. The system of claims 6 or 7, wherein it further comprises fluid separation means (20) coupled to the flowmeter (18) for releasing the air or inert gas and retaining the powder, and a powder deposit (19) coupled to the fluid separation means (20) for storing the filtered powder.

9. The system of claim 8, further comprising a second pressure relief means (21) connected to the powder deposit (19) and configured for relieving the pressure in the powder deposit (19) when it is above a certain limit.

10. The system of any of claims 6 to 9, wherein it further comprises
at least a pressure variation measuring means (14) configured to detect a pressure variation in the annular space (12').

11. The system of claims 10, wherein the controller (30) is further connected to the pressure variation measuring means (14) and wherein the system if further configured to trigger an alarm and/or send a stop signal to the powder feeder (40) if a pressure variation over a certain threshold is detected in the annular space (12').

12. A method for detecting leaks in hoses through which gas and powder are transported, wherein the method comprises:
providing (100) a leak detection system according to any of claims 1 to 5,
monitoring (102), with the at least a pressure variation measuring means (14) the pressure in the annular space (12'), and
triggering an alert (104) and/or sending a stop signal to the powder feeder (40) if a pressure variation above a certain threshold is detected in the annular space (12').

13. The method of claim 12, wherein the method further comprises providing (100) a leak monitoring system according to claim 5, and wherein the method further comprises, before the monitoring (102) step:
injecting (105), with the gas injecting means (16), an inert gas in the annular space (12') until a predetermined initial pressure is reached in the annular space (12') and closing (106) the gas injecting means (16),
measuring (107), with the pressure variation measuring means (14) the initial pressure in the annular space (12'),
and wherein the alert (104) is triggered and/or a stop signal is sent to the powder feeder (40) if a pressure variation above a certain threshold with respect to the initial pressure is detected in the annular space (12').

14. A method for monitoring a leak in a hose through which gas and powder are transported, wherein the method comprises:
providing (100) a leak monitoring system according to any of claims 6 to 11,
injecting continuously (105') air or inert gas with the gas injecting means (16) in the annular space (12'),
monitoring (102), in the flowmeter (18), the injected air or inert gas, and
triggering and alert (104) and/or sending a stop signal to the powder feeder (40) if the flowmeter (18) detects powder.

15. The method of claim 14, wherein the method further comprises providing (100) a leak monitoring system according to claims 10 or 11, and wherein the method further comprises:
monitoring (102), in the at least one pressure variation measuring means (14) the pressure in the annular space (12'), and
triggering and alert (104) and/or sending a stop signal to the powder feeder (40) if a pressure variation above a certain threshold is detected in the annular space (12') and/or if the flowmeter (18) detects powder.
